# EUROPÄISCHE PATENTSCHRIFT

(11) **EP 3 321 049 B1**
(45) Veröffentlichungstag und Bekanntmachung des Hinweises auf die Patenterteilung: **24.02.2021**
(21) Anmeldenummer: 17001854.3
(22) Anmeldetag: 13.11.2017
(51) Int. Cl.: B27B 17/00, B27B 17/02, B27B 17/08

(54) **HANDGEFÜHRTE, TRAGBARE SCHNEIDVORRICHTUNG MIT EINER SCHNEIDGARNITUR**
HAND-HELD, PORTABLE CUTTING DEVICE WITH A CUTTING FITTING
DISPOSITIF DE COUPE TENU À LA MAIN PORTABLE POURVU D'UN ASSEMBLAGE DE COUPE

(30) Priorität: 14.11.2016 DE 102016013910
(43) Veröffentlichungstag der Anmeldung: 16.05.2018
(73) Patentinhaber: Andreas Stihl AG & Co. KG, 71336 Waiblingen (DE)
(72) Erfinder: Mang, Harald, D-71364 Winnenden (DE); Trenn, Alexander, D-72636 Frickenhausen (DE)
(74) Vertreter: Wasmuth, Rolf

(56) Entgegenhaltungen:
- EP-A1- 2 072 200
- WO-A1-2006/082062
- WO-A2-2007/147157
- DE-A1-102012 215 450
- US-A- 2 990 858
- US-A- 4 819 335
- US-A1- 2013 219 725
- US-A1- 2017 239 835

## Beschreibung

Die Erfindung betrifft eine handgeführte, tragbare Schneidvorrichtung mit einer Schneidgarnitur, die an einen zentralen Gehäuseabschnitt der Schneidvorrichtung anschließt. In dem zentralen Gehäuseabschnitt der Schneidvorrichtung ist eine Antriebsverbindung zwischen einem elektrischen Antriebsmotor und der Schneidgarnitur angeordnet. Der Antriebsmotor ist in einem Motorgehäuse aufgenommen, welches sich von dem zentralen Gehäuseabschnitt erstreckt und eine Motorgehäuselängsachse aufweist. Zum Halten und Führen der Schneidvorrichtung ist ein Handgriff vorgesehen, der sich von dem zentralen Gehäuseabschnitt erstreckt und eine Grifflängsachse aufweist. Der Handgriff hat in Grifflängsrichtung ein an dem zentralen Gehäuseabschnitt anschließendes vorderes Ende und ein freies hinteres Ende. Bei einer derartigen Schneidvorrichtung mit einer Schneidgarnitur ist für eine dauerhafte Benutzung eine ergonomisch angepasste Gestaltung notwendig.

Aus der EP 2 072 200 A1 ist eine Schneidvorrichtung gemäß der Oberbegriff des Anspruchs 1 bekannt. Dieses Dokument offenbart ein Handarbeitsgerät mit einer umlaufenden Sägekette, bei der die Drehachse des Kettenritzels auf der Längsmittelachse der Führungsschiene liegt, um einen ordnungsgemäßer Betrieb der Sägekette zu gewährleisten. Die Gehäuselängsachse verläuft winklig zur Längsmittelachse der Führungsschiene.

Der Erfindung liegt die Aufgabe zugrunde, eine Schneidvorrichtung der angegebenen Gattung derart weiterzubilden, dass ein ermüdungsfreies, ergonomisches Führen der Schneidvorrichtung durch den Benutzer gewährleistet ist.

Die Aufgabe wird nach den Merkmalen des Anspruchs 1 gelöst.

Als leistungsstarke Schneidgarnitur ist die auf einer Führungsschiene umlaufende Sägekette vorgesehen, wobei der elektrische Antriebsmotor über die Antriebsverbindung die Sägekette antreibt. Die Auslegung der Schneidvorrichtung ist dabei so getroffen, dass in Seitenansicht auf die Schneidvorrichtung sich der hintere Handgriff in einer ersten radialen Richtung radial vom zentralen Gehäuseabschnitt mit dem Antriebsrad erstreckt, und sich das Motorgehäuse mit dem elektrischen Antriebsmotor in einer zweiten radialen Richtung radial von dem zentralen Gehäuseabschnitt erstreckt. Die Schneidgarnitur erstreckt sich über eine Länge in einer dritten radialen Richtung von dem zentralen Gehäuseabschnitt mit dem Antriebsrad, wobei der Schnittpunkt zwischen der Grifflängsachse und der Motorgehäuselängsachse sowie der Schnittpunkt zwischen der Grifflängsachse und einer Schneidgarniturlängsachse im Bereich des zentralen Gehäuseabschnitts liegt.

Diese Auslegung und Anordnung der verschiedenen Elemente einer Schneidvorrichtung rund um einen zentralen Gehäuseabschnitt führt zu einer ergonomisch vorteilhaften Gehäuseausbildung, die ein ermüdungsfreies Arbeiten mit der Schneidvorrichtung möglich macht.

In besonderer Ausbildung der Erfindung erstrecken sich die Schneidgarnitur, das Motorgehäuse und der Handgriff in radialen Richtungen von dem zentralen Gehäuseabschnitt weg. Dabei liegen die Schneidgarnitur, das Motorgehäuse und der Handgriff in Umfangsrichtung um den zentralen Gehäuseabschnitt mit Abstand voneinander.

Die Anordnung wird vorteilhaft so getroffen, dass in Stirnansicht auf die Drehachse eines rotierenden Antriebsrades der Antriebsverbindung die Schnittpunkte zwischen der Grifflängsachse und der Motorgehäuselängsachse, zwischen der Schneidgarniturlängsachse und der Grifflängsachse und zwischen der Schneidgarniturlängsachse und der Motorgehäuselängsachse innerhalb der Kontur des Antriebsrades liegen. Vorteilhaft ist die Anordnung dabei so getroffen, dass sich in Seitenansicht auf die Schneidvorrichtung die Schneidgarnitur, das Motorgehäuse und der Handgriff radial zur Drehachse des Antriebsrades erstrecken.

Ein die Sägekette der Schneidgarnitur antreibendes Kettenrad liegt vorteilhaft innerhalb der Kontur des Antriebsrades und ist von einem Kettenraddeckel abgedeckt. Der Kettenraddeckel ist zweckmäßig Teil des zentralen Gehäuseabschnitts.

Die Grifflängsachse und die Motorgehäuselängsachse schließen einen zum hinteren Ende des Handgriffs öffnenden Handwinkel ein. Dieser Handwinkel hat eine Größe im Bereich von 40° bis 80°, insbesondere eine Größe von 60°. Durch die Ausbildung des Handwinkels wird zwischen dem Motorgehäuse und dem Handgriff eine geschützte Aufnahme für eine den Handgriff umgreifende Benutzerhand eines Benutzers gebildet.

Die Ausbildung eines Handwinkels unter Ausbildung einer Aufnahme hat ferner den Vorteil, dass der Benutzer z. B. über den Handrücken der Benutzerhand, eine Vorschubkraft auf die Schneidgarnitur, im Ausführungsbeispiel auf die Sägekette der Schneidgarnitur, aufbringen kann.

In Umfangsrichtung auf der gegenüberliegenden Seite des Handgriffs ist zwischen der Grifflängsachse des Handgriffs und der Schneidgarniturlängsachse ein Griffwinkel ausgebildet, der insbesondere größer als 90° ist. Vorzugsweise beträgt der Griffwinkel 150°.

In Weiterbildung der Erfindung ist der Griffwinkel durch einen Fingerschutz unterteilt. Dabei kann der Fingerschutz mit der Grifflängsachse einen zum hinteren Ende des Handgriffs öffnenden Fingerwinkel von 80° bis 110° begrenzen. Vorteilhaft ist der Fingerwinkel mit 90° ausgelegt.

Ein zwischen der Motorgehäuselängsachse und der Schneidgarniturlängsachse liegender Gerätewinkel ist derart ausgelegt, dass er größer als 90° ist. Der Gerätewinkel beträgt insbesondere 150°.

In Weiterbildung der Erfindung ist vorgesehen, dass die Summe aus Handwinkel und Gerätewinkel regelmäßig größer als 180° ist.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in einer ersten Seitenansicht eine handgeführte, tragbare Schneidvorrichtung,
- Fig. 2: in einer zweiten Seitenansicht die handgeführte, tragbare Schneidvorrichtung nach Fig. 1,
- Fig. 3: eine Draufsicht auf die Schneidvorrichtung nach Fig. 2,
- Fig. 4: einen schematischen Schnitt durch die Schneidvorrichtung längs der Linie IV-IV in Fig. 2,
- Fig. 5: einen schematischen Schnitt durch die Schneidvorrichtung längs der Linie V-V in Fig. 2,
- Fig. 6: einen schematischen Schnitt durch die Schneidvorrichtung längs der Linie VI-VI in Fig. 2.

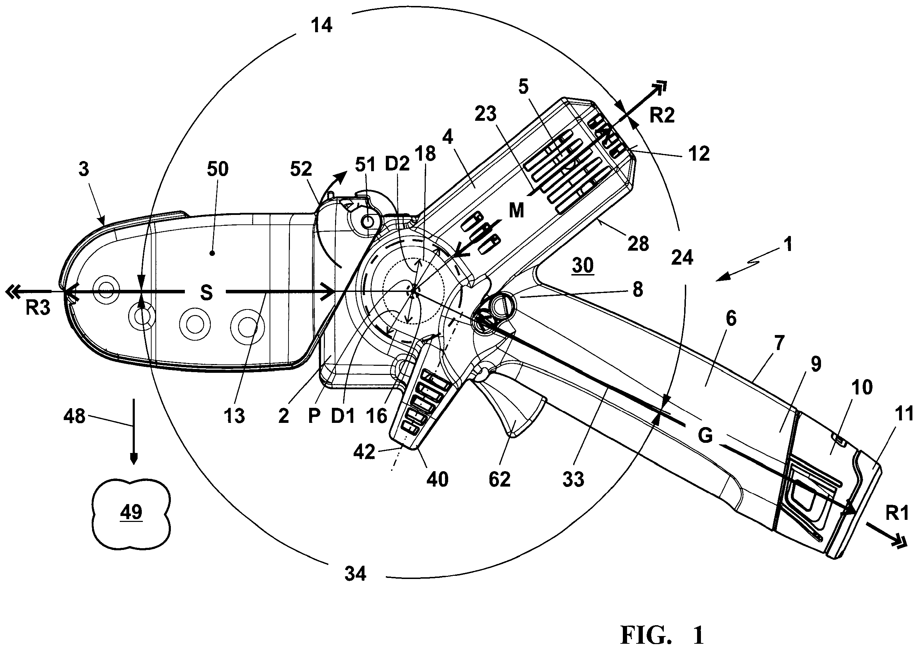

Die in Seitenansicht in Fig. 1 dargestellte handgeführte Schneidvorrichtung 1 ist zweckmäßig als sogenannter Gehölzschneider ausgebildet. Die Schneidvorrichtung 1 besteht im Wesentlichen aus einem zentralen Gehäuseabschnitt 2, an dem eine Schneidgarnitur 3, ein Motorgehäuse 4 mit einem elektrischen Antriebsmotor 5 sowie ein Handgriff 6 angeordnet sind.

Der Handgriff 6 ist von einem stabförmigen Griffgehäuse 7 gebildet, das mit einem vorderen Ende 8 an dem zentralen Gehäuseabschnitt 2 angebunden ist. Das hintere Ende 9 des Griffgehäuses 7 ist offen ausgebildet. In das offene, hintere Ende 9 wird ein Akkupack 10 eingeschoben, der mit einem Endabschnitt 11 aus dem Griffgehäuse 7 vorsteht. Der Endabschnitt 11 ist als verlängertes Ende des Griffgehäuses 7 gestaltet. Der stabförmige Handgriff 6 weist eine Grifflänge G auf, die sich von dem vorderen Ende 8 des Griffgehäuses 7 bis zum hinteren Ende des Endabschnitts 11 des Akkupacks 10 bemisst. Der hintere Handgriff 6 erstreckt sich in einer ersten radialen Richtung R1 radial vom zentralen Gehäuseabschnitt 2.

Das Motorgehäuse 4 mit dem elektrischen Antriebsmotor 5 erstrecken sich in einer zweiten radialen Richtung R2 radial vom zentralen Gehäuseabschnitt 2. Gemessen vom zentralen Gehäuseabschnitt 2 bis zum freien Ende 12 des Motorgehäuses 4 hat das Motorgehäuse 4 eine Länge M.

In einer dritten radialen Richtung R3 erstreckt sich die Schneidgarnitur 3 über eine Länge S radial vom zentralen Gehäuseabschnitt 2; die Länge S der Schneidgarnitur 3 ist größer als die Länge M des Motorgehäuses 4 und kleiner als die Grifflänge G.

In der in Fig. 1 gezeigten Normallage der Schneidgarnitur 3 liegt eine Schneidgarniturlängsachse 13 etwa horizontal. Die radiale Richtung R3 liegt somit horizontal.

Im Uhrzeigersinn liegt die radiale Richtung R2 des Motorgehäuses 4 um einen Umfangswinkel 14 gedreht. Ferner liegt im Uhrzeigersinn zwischen der radialen Richtung R2 und der radialen Richtung R1 des Handgriffs 6 ein Umfangswinkel 24 von 65°.

Die radiale Richtung R3 der Schneidgarniturlängsachse 13 ist gegenüber der radialen Richtung R1 der Grifflängsachse 33 im Uhrzeigersinn um einen Umfangswinkel 34 von 155° gedreht.

Im zentralen Gehäuseabschnitt 2 ist eine Antriebsverbindung 15 aufgenommen, die zwischen dem elektrischen Antriebsmotor 5 und der Schneidgarnitur 3 angeordnet ist. Die Antriebsverbindung 15 weist ein um eine Drehachse 16 drehendes Antriebsrad 17 auf.

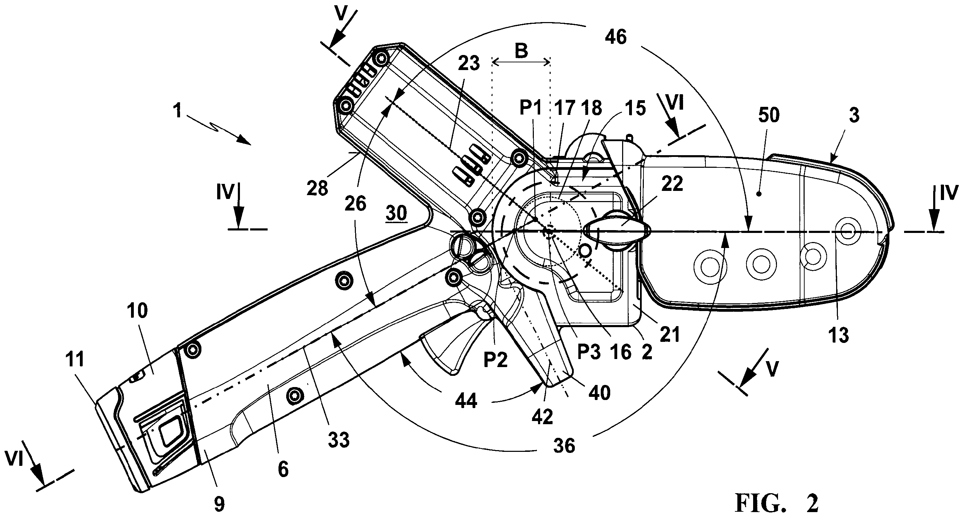

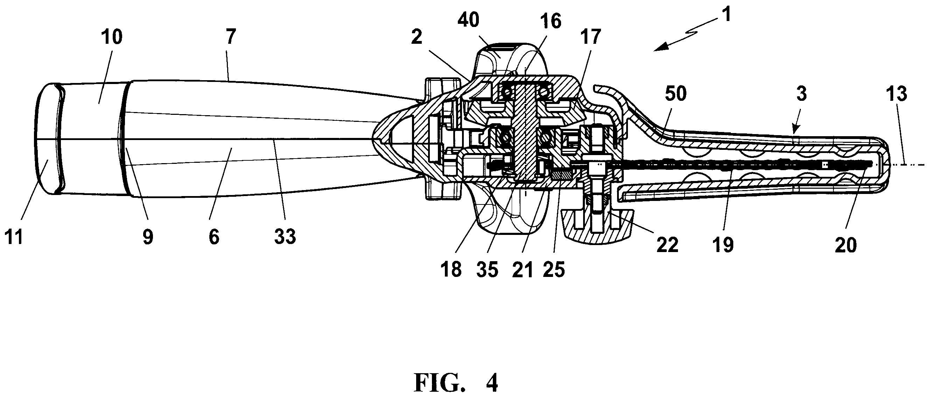

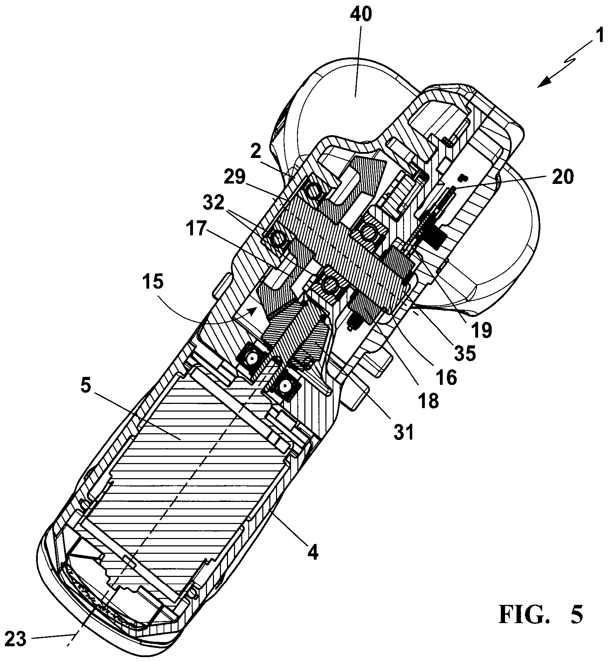

Das Antriebsrad 17 ist - wie die Fig. 4 und 5 zeigen - im gezeigten Ausführungsbeispiel drehfest auf einer Antriebswelle 29 gehalten, an deren einem Ende ein Kettenrad 18 angeordnet ist. Wie insbesondere die Figuren 4 bis 6 zeigen, besteht die Schneidgarnitur 3 aus einer Führungsschiene 19 (Fig. 4) und einer darauf umlaufenden Sägekette 20. In Seitenansicht auf die Schneidvorrichtung 1, z. B. in Seitenansicht gemäß Fig. 2, weisen eine Grifflängsachse 33 und die Motorgehäuselängsachse 23 einen Schnittpunkt P1 auf, der - vgl. die Figuren 1 und 2 - in Seitenansicht im zentralen Gehäuseabschnitt 2 liegt. Der Schnittpunkt P2 zwischen der Grifflängsachse 33 und der Schneidgarniturlängsachse 13 liegt in Seitenansicht auf die Schneidvorrichtung 1 ebenfalls im zentralen Gehäuseabschnitt 2.

Wie Fig. 2 ferner zeigt, liegt ein Schnittpunkt P3 der Schneidgarniturlängsachse 13 mit der Motorgehäuselängsachse 23 im zentralen Gehäuseabschnitt 2, insbesondere auf der Drehachse 16 des Antriebsrades 17.

In besonderer Ausgestaltung der Erfindung liegen die Schnittpunkte P1, P2 und P3 der Schneidgarniturlängsachse 13, der Motorgehäuselängsachse 23 und der Grifflängsachse 33 in einem Bereich B des zentralen Gehäuseabschnitts 2, der - wie Fig. 2 zeigt - sich zwischen der Drehachse 16 und dem vorderen Ende 8 des Handgriffs 6 erstreckt.

In besonderer Gestaltung der Erfindung liegen die Schnittpunkte P1, P2 und P3 der Schneidgarniturlängsachse 13, der Motorgehäuselängsachse 23 und der Grifflängsachse 33 in Seitenansicht innerhalb der Kontur des Antriebsrades 16, wie Fig. 2 zeigt. Bevorzugt erstrecken sich die Schneidgarnitur 3, das Motorgehäuse 4 und der Handgriff 6 radial zur Drehachse 16 des Antriebsrades (Fig. 1).

Es kann - wie in Fig. 1 dargestellt - vorteilhaft sein, wenn die Schnittpunkte zwischen der Schneidgarniturlängsachse 13, der Motorgehäuselängsachse 23 und der Grifflängsachse 33 einen gemeinsamen Schnittpunkt P bilden. Insbesondere kann der gemeinsame Schnittpunkt P auf der Drehachse 16 des Antriebsrades 17 liegen.

Das Kettenrad 18 hat einen kleineren Durchmesser D2 als der Durchmesser D1 des mit dem Antriebsritzel 31 des Antriebsmotors 5 kämmenden Antriebsrades 17. In Seitenansicht nach den Fig. 1 und 2 liegt das Kettenrad 18 innerhalb der Kontur des Antriebsrades 17. Wie Fig. 1 zeigt, ist es vorteilhaft, wenn die Schnittpunkte zwischen der Schneidgarniturlängsachse 13, der Motorgehäuselängsachse 23 und der Grifflängsachse 33 innerhalb der Kontur des Kettenrads 18 liegen. In Fig. 1 liegt der gemeinsame Schnittpunkt P innerhalb der Kontur des Antriebsrades 17 und auch innerhalb der Kontur des Kettenrades 18. Dabei können einzelne Schnittpunkte P1 und P3 innerhalb der Kontur des Kettenrades 18 liegen (Fig. 2) oder auch im Randbereich der Kontur des Kettenrades 18, wie Fig. 2 zeigt.

Das Kettenrad 18 ist von einem Kettenraddeckel 21 abgedeckt, der mittels eines Schraubbolzens 22 an dem zentralen Gehäuseabschnitt 2 festgelegt ist. Zwischen dem Kettenraddeckel 21 und einem Gegenlager 25 des zentralen Gehäuseabschnitts 2 ist die Führungsschiene 19 der Schneidgarnitur 3 geklemmt gehalten. Der Kettenraddeckel 21 bildet einen Teil des zentralen Gehäuseabschnitts 2.

Wie Fig. 2 zeigt, schließen die Grifflängsachse 33 und die Motorgehäuselängsachse 23 einen zum hinteren Ende 9 offenen Handwinkel 26 ein. Der Handwinkel 26 liegt vorteilhaft in einem Bereich von 40° bis 80°. Zweckmäßig hat der zwischen der Grifflängsachse 33 des Handgriffes 6 und der Motorgehäuselängsachse 23 liegende Handwinkel 26 eine Größe von 60°.

Durch den Handwinkel 26 ist zwischen dem Motorgehäuse 4 und dem Handgriff 6 eine geschützte Aufnahme 30 für eine den Handgriff 6 umschließende Benutzerhand gebildet. Vorteilhaft ist der Handwinkel 26 derart bemessen, dass eine den Handgriff 6 umgreifende Benutzerhand zur Anlage an eine Anlagefläche 28 des Motorgehäuses 4 gebracht werden kann, um eine Vorschubkraft in die Schneidvorrichtung 1 einzuleiten.

Bezogen auf die Drehachse 16 des Antriebsrades 17 bzw. des Kettenrades 18 liegt in Umfangsrichtung auf der gegenüberliegenden Seite des Handgriffs 6 zwischen der Grifflängsachse 33 und der Schneidgarniturlängsachse 13 ein Griffwinkel 36, der vorteilhaft größer als 90° ist. Der Griffwinkel 36 beträgt insbesondere 150°.

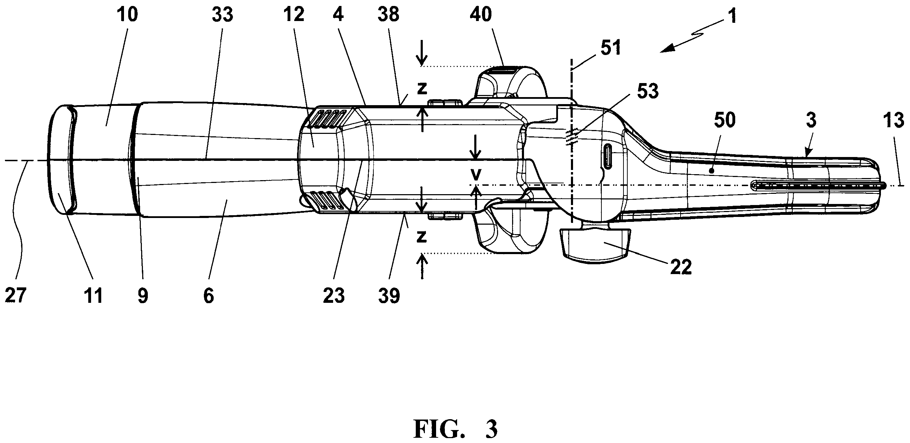

Wie in den Figuren 1 und 2 dargestellt, ist der Griffwinkel 36 durch einen Fingerschutz 40 unterteilt. Der Fingerschutz 40 wird von einer Art scheibenförmigen Trennwand 41 gebildet, wie die Figuren 3 bis 6 zeigen. Bevorzugt liegt die Trennwandebene 42 derart, dass die Grifflängsachse 33 als Lot auf der Trennwandebene 42 steht. Die Trennwand 41 steht gegenüber den Längsseiten 38 und 39 der Schneidvorrichtung 1 um einen Überstand z vor. Durch die Trennwand 41 ist die den Handgriff 6 umgreifende Benutzerhand gegenüber der Schneidgarnitur 3 geschützt.

Die Trennwand 41 des Fingerschutzes 40 begrenzt mit der Grifflängsachse 33 einen zum hinteren Ende 9 des Handgriffs 6 öffnenden Fingerwinkel 44 von etwa 80° bis 110°. Im gezeigten Ausführungsbeispiel beträgt der Fingerwinkel 90°.

Ein zwischen der Motorgehäuselängsachse 23 und der Schneidgarniturlängsachse 13 liegender Gerätewinkel 46 ist größer als 90°. Insbesondere beträgt der Winkel 150°.

Die Anordnung von Handgriff 6, Motorgehäuse 4 und Schneidgarnitur 3 um den zentralen Gehäuseabschnitt 2 ist insbesondere derart vorgesehen, dass die Summe aus Handwinkel 26 und Gerätewinkel 46 größer ist als 180°, insbesondere 205° groß ist. Wie aus der Draufsicht nach Fig. 3 zu ersehen, liegen die Grifflängsachse 33 und die Motorgehäuselängsachse 23 in einer gemeinsamen Ebene 27. Die Schneidgarniturlängsachse 13 liegt in Draufsicht gemäß Fig. 3 mit einem seitlichen Versatz v zur Ebene 27. Die Schneidgarniturlängsachse 13 verläuft vorzugsweise parallel zur Ebene 27.

Die Schneidgarnitur 3 ist von einer Schutzhaube 50 abgedeckt, die - vgl. Fig. 3 - um eine Haubenschwenkachse 51 verschwenkbar ist. Hierzu ist die Schutzhaube 50 am zentralen Gehäuseabschnitt 2 schwenkbar gelagert. Die Schwenklagerung ist am zentralen Gehäuseabschnitt 2 zwischen der Schneidgarnitur 3 und dem Motorgehäuse 4 vorgesehen.

Wird die Schneidgarnitur 3 in Richtung des Bewegungspfeils 48 auf ein zu schneidendes Werkstück 49 abgesenkt, so schwenkt die Schutzhaube 50 in Pfeilrichtung 52 um die Haubenschwenkachse 51 nach oben, so dass die auf der Führungsschiene 19 umlaufende Sägekette 20 mit dem Werkstück 49 in Schneideingriff kommt.

Wird die Schneidvorrichtung 3 entgegen dem Bewegungspfeil 48 angehoben, schwenkt die Schutzhaube unter der Wirkung einer Rückstellfeder 53 entgegen Pfeilrichtung 52 zurück, so dass die Führungsschiene 19 mit der Sägekette 20 wieder von der Schutzhaube 50 abgedeckt ist.

Aus den Figuren 4 und 5 ist insbesondere die Antriebsverbindung 15 ersichtlich. Der Elektromotor 5 treibt das Antriebsritzel 31 an, welches mit dem Antriebsrad 17 kämmt. Das Antriebsrad 17 ist auf der Antriebswelle 29 drehfest gehalten. Die Antriebswelle 29 ist mit zwei Lagern 32 im zentralen Gehäuseabschnitt 2 drehbar gehalten. Auf einem freien Ende 35 der Antriebswelle 29 ist das Kettenrad 18 montiert, welches die auf der Führungsschiene 19 umlaufende Sägekette 20 antreibt.

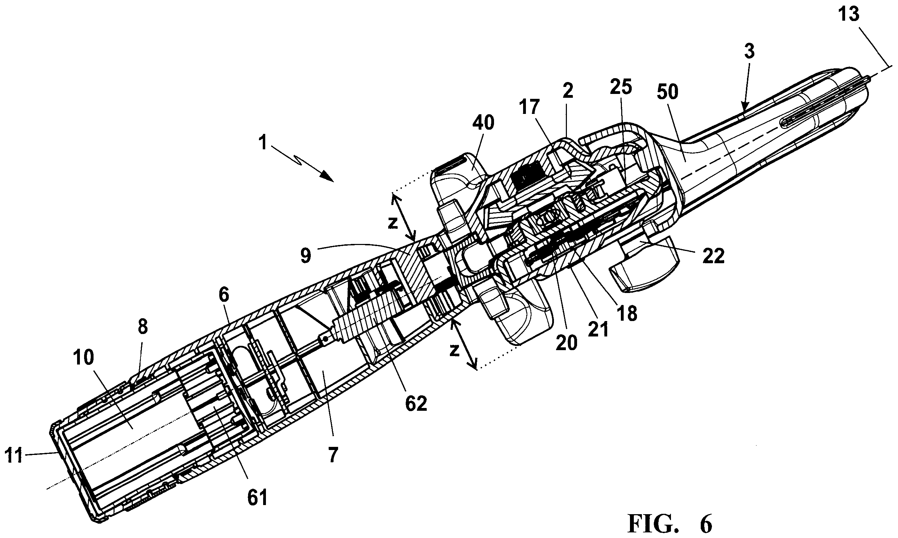

Aus der Schnittdarstellung nach Fig. 6 wird deutlich, dass der Akkupack 10 zumindest mit einem Ende 61 im Griffgehäuse 7 des Handgriffs 6 eingeschoben ist. Innerhalb des Griffgehäuses 7 ist der Akkupack 10 mit der Antriebselektronik des elektrischen Antriebsmotors 5 und einem als Gashebel 62 ausgebildeten Stellelement zur Steuerung des elektrischen Antriebsmotors 5 verbunden.

## Patentansprüche

1. Handgeführte, tragbare Schneidvorrichtung (1) mit einer Schneidgarnitur (3), wobei die Schneidgarnitur (3) an einen zentralen Gehäuseabschnitt (2) der Schneidvorrichtung (1) anschließt und eine Schneidgarniturlängsachse (13) aufweist,
- und in dem zentralen Gehäuseabschnitt (2) der Schneidvorrichtung (1) eine Antriebsverbindung (15) zwischen einem elektrischen Antriebsmotor (5) und der Schneidgarnitur (3) angeordnet ist, und die Antriebsverbindung (15) ein um eine Drehachse (16) rotierendes Antriebsrad (17) umfasst,
- wobei der Antriebsmotor (5) in einem Motorgehäuse (4) aufgenommen ist, und sich das Motorgehäuse (4) von dem zentralen Gehäuseabschnitt (2) erstreckt und eine Motorgehäuselängsachse (23) aufweist,
- und mit einem Handgriff (6), der sich von dem zentralen Gehäuseabschnitt (2) erstreckt und eine Grifflängsachse (33) aufweist, wobei der Handgriff (6) in Grifflängsrichtung ein an den zentralen Gehäuseabschnitt (2) anschließendes vorderes Ende (8) und ein hinteres Ende (9) aufweist,
- wobei die Schneidgarnitur (3) aus einer Führungsschiene (19) und einer darauf umlaufenden Sägekette (20) besteht, und der Antriebsmotor (5) über die Antriebsverbindung (15) die Sägekette (20) antreibt,
- wobei sich der hintere Handgriff (6) in einer ersten radialen Richtung (R1) radial vom zentralen Gehäuseabschnitt (2) mit dem Antriebsrad (17) erstreckt,
- und sich das Motorgehäuse (4) mit dem elektrischen Antriebsmotor (5) in einer zweiten radialen Richtung (R2) radial von dem zentralen Gehäuseabschnitt (2) mit dem Antriebsrad (17) erstreckt,
- und sich die Schneidgarnitur (3) über eine Länge (S) in einer dritten radialen Richtung (R3) von dem zentralen Gehäuseabschnitt (2) mit dem Antriebsrad (17) erstreckt,
- wobei in Seitenansicht auf die Schneidvorrichtung (3) der Schnittpunkt (P1) zwischen der Grifflängsachse (33) und der Motorgehäuselängsachse (23) sowie der Schnittpunkt (P2) zwischen der Grifflängsachse (33) und der Schneidgarniturlängsachse (13) im zentralen Gehäuseabschnitt (2) liegt, **dadurch gekennzeichnet, dass** in Stirnansicht auf die Drehachse (16) die Schnittpunkte (P1, P2) innerhalb der Kontur des Antriebsrades (17) liegen.

2. Schneidvorrichtung nach Anspruch 1,
**dadurch gekennzeichnet, dass** sich die Schneidgarnitur (3), das Motorgehäuse (4) und der Handgriff (6) in radialen Richtungen (R1, R2, R3) von dem zentralen Gehäuseabschnitt (2) erstrecken.

3. Schneidvorrichtung nach Anspruch 1,
**dadurch gekennzeichnet, dass** sich in Seitenansicht auf die Schneidvorrichtung (1) die Schneidgarnitur (3), das Motorgehäuse (4) und der Handgriff (6) radial zur Drehachse (16) erstrecken.

4. Schneidvorrichtung nach Anspruch 1,
**dadurch gekennzeichnet, dass** innerhalb der Kontur des Antriebsrades (17) ein Kettenrad (18) angeordnet ist, das von einem Kettenraddeckel (21) abgedeckt ist.

5. Schneidvorrichtung nach Anspruch 4,
**dadurch gekennzeichnet, dass** der Kettenraddeckel (21) Teil des zentralen Gehäuseabschnittes (2) ist.

6. Schneidvorrichtung nach Anspruch 1,
**dadurch gekennzeichnet, dass** die Grifflängsachse (33) und die Motorgehäuselängsachse (23) einen zum hinteren Ende (9) des Handgriffes (6) öffnenden Handwinkel (26) im Bereich von 40° bis 80° einschließen, derart, dass das Motorgehäuse (4) und der Handgriff (6) eine geschützte Aufnahme (30) für eine Benutzerhand begrenzen.

7. Schneidvorrichtung nach Anspruch 1,
**dadurch gekennzeichnet, dass** der zwischen der Grifflängsachse (33) des Handgriffes (6) und der Motorgehäuselängsachse (23) liegender Handwinkel (26) eine Größe von 60° hat.

8. Schneidvorrichtung nach Anspruch 1,
**dadurch gekennzeichnet, dass** ein zwischen der Grifflängsachse (33) und der Schneidgarniturlängsachse (13) liegender Griffwinkel (36) größer 90° ist.

9. Schneidvorrichtung nach Anspruch 8,
**dadurch gekennzeichnet, dass** der Griffwinkel (36) 150° beträgt.

10. Schneidvorrichtung nach Anspruch 8,
**dadurch gekennzeichnet, dass** der Griffwinkel (36) durch einen Fingerschutz (40) unterteilt ist.

11. Schneidvorrichtung nach Anspruch 10,
**dadurch gekennzeichnet, dass** der Fingerschutz (40) mit der Grifflängsachse (33) einen zum hinteren Ende (9) des Handgriffes (6) öffnenden Fingerwinkel (44) von 80° bis 110° begrenzt.

12. Schneidvorrichtung nach Anspruch 11
**dadurch gekennzeichnet, dass** der Fingerwinkel (44) 90° beträgt.

13. Schneidvorrichtung nach Anspruch 1,
**dadurch gekennzeichnet, dass** ein zwischen der Motorgehäuselängsachse (23) und der Schneidgarniturlängsachse (13) liegender Gerätewinkel (46) größer als 90° ist, insbesondere 150° beträgt.

14. Schneidvorrichtung nach den Ansprüchen 12 und 13,
**dadurch gekennzeichnet, dass** die Summe aus Handwinkel (26) und Gerätewinkel (46) größer als 180° ist.

## Claims

1. Hand-guided portable cutting device (1) with a cutting fitting (3), wherein the cutting fitting (3) adjoins a central housing section (2) of the cutting device (1) and has a cutting fitting longitudinal axis (13),
- and wherein a drive connection (15) is located in the central housing section (2) of the cutting device (1) between an electric drive motor (5) and the cutting fitting (3) and the drive connection (15) comprises a drive gear (17) rotating about an axis of rotation (16),
- wherein the drive motor (5) is accommodated in a motor housing (4) and the motor housing (4) extends from the central housing section (2) and has a motor housing longitudinal axis (23),
- and with a handle (6) extending from the central housing section (2) and having a handle longitudinal axis (33), wherein the handle (6) has a front end (8) adjoining the central housing section (2) in the handle longitudinal direction and a rear end (9),
- wherein the cutting fitting (3) consists of a guide rail (19) and a saw chain (20) running thereon and the drive motor (5) drives the saw chain (20) by way of the drive connection (15),
- wherein the rear handle (6) extends in a first radial direction (R1) radially from the central housing section (2) with the drive gear (17),
- and the motor housing (4) with the electric drive motor (5) extends in a second radial direction (R2) radially from the central housing section (2) with the drive gear (17),
- and the cutting fitting (3) extends along a length (S) in a third radial direction (R3) from the central housing section (2) with the drive gear (17),
- wherein in a side view on the cutting device (3) the point of intersection (P1) between the handle longitudinal axis (33) and the motor housing longitudinal axis (23) and the point of intersection (P2) between the handle longitudinal axis (33) and the cutting fitting longitudinal axis (13) lie in the central housing section (2), **characterised in that** in an end view on the axis of rotation (16) the points of intersection (P1, P2) lie within the contour of the drive gear (17).

2. Cutting implement according to claim 1,
**characterised in that** the cutting fitting (3), the motor housing (4) and the handle (6) extend in radial directions (R1, R2, R3) from the central housing section (2).

3. Cutting implement according to claim 1,
**characterised in that** in a side view on the cutting device (1) the cutting fitting (3), the motor housing (4) and the handle (6) extend radially with respect to the axis of rotation (16).

4. Cutting implement according to claim 1,
**characterised in that** a sprocket (18) covered by a sprocket cover (21) is located within the contour of the drive gear (17).

5. Cutting implement according to claim 4,
**characterised in that** the sprocket cover (21) is a part of the central housing section (2).

6. Cutting implement according to claim 1,
**characterised in that** the handle longitudinal axis (33) and the motor housing longitudinal axis (23) enclose a hand angle (26) open towards the rear end (9) of the handle (6) and lying within the range of 40° to 80° in such a way that the motor housing (4) and the handle (6) bound a protected receptacle (30) for a used hand.

7. Cutting implement according to claim 1,
**characterised in that** the hand angle (26) between the handle longitudinal axis (33) of the handle (6) and the motor housing longitudinal axis (23) has a magnitude of 60°.

8. Cutting implement according to claim 1,
**characterised in that** a handle angle (36) between the handle longitudinal axis (33) and the cutting fitting longitudinal axis (13) is greater than 90°.

9. Cutting implement according to claim 8,
**characterised in that** the handle angle (36) is 150°.

10. Cutting implement according to claim 8,
**characterised in that** the handle angle (36) is divided by a finger guard (40).

11. Cutting implement according to claim 10,
**characterised in that** the finger guard (40) encloses with the handle longitudinal axis (33) a finger angle (44) of 80° to 110°, which opens towards the rear end (9) of the handle (6).

12. Cutting implement according to claim 11,
**characterised in that** the finger angle (44) is 90°.

13. Cutting implement according to claim 1,
**characterised in that** an implement angle (46) between the motor housing longitudinal axis (23) and the cutting fitting longitudinal axis (13) is greater than 90°, being in particular 150°.

14. Cutting implement according to claims 12 and 13,
**characterised in that** the sum of hand angle (26) and implement angle (46) is greater than 180°.

## Revendications

1. Dispositif de coupe (1) portable guidé à la main comprenant une garniture de coupe (3), dans lequel la garniture de coupe (3) se raccorde à une section de boîtier centrale (2) du dispositif de coupe (3) et comporte un axe longitudinal de garniture de coupe (3),
- et dans la section de boîtier centrale (2) du dispositif de coupe (1) est disposée une liaison d'entraînement (15) entre un moteur d'entraînement électrique (5) et la garniture de coupe (3), et la liaison d'entraînement (15) comprend une roue d'entraînement (17) tournant autour d'un axe de rotation (16),
- dans lequel le moteur d'entraînement (5) est logé dans un boîtier de moteur (4), et le boîtier de moteur (4) s'étend depuis la section de boîtier centrale (2) et comporte un axe longitudinal de boîtier de moteur (23),
- et comprenant une poignée (6) qui s'étend depuis la section de boîtier centrale (2) et comporte un axe longitudinal de poignée (33), dans lequel la poignée (6) comporte dans la direction longitudinale de poignée une extrémité avant (8) se raccordant à la section de boîtier centrale (2) et une extrémité arrière (9),
- dans lequel la garniture de coupe (3) se compose d'un rail de guidage (19) et d'une chaîne de scie (20) circulant sur celui-ci, et le moteur d'entraînement (5) entraîne la chaîne de scie (20) par l'intermédiaire de la liaison d'entraînement (15),
- dans lequel la poignée arrière (6) s'étend dans une première direction radiale (R1) radialement depuis la section de boîtier centrale (2) comprenant la roue d'entraînement (17),
- et le boîtier de moteur (4) avec le moteur d'entraînement électrique (5) s'étend dans une deuxième direction radiale (R2) radialement depuis la section de boîtier centrale (2) comprenant la roue d'entraînement (17),
- et la garniture de coupe (3) s'étend sur une longueur (S) dans une troisième direction radiale (R3) radialement depuis la section de boîtier centrale (2) comprenant la roue d'entraînement (17),
- dans lequel en vue latérale du dispositif de coupe (3), l'intersection (P1) entre l'axe longitudinal de poignée (33) et l'axe longitudinal de boîtier de moteur (23) ainsi que l'intersection (P2) entre l'axe longitudinal de poignée (33) et l'axe longitudinal de la garniture de coupe (13) est située dans la section de boîtier centrale (2),
**caractérisé en ce qu'**en vue frontale de l'axe de rotation (16), les intersections (P1, P2) sont situées à l'intérieur du contour de la roue d'entraînement (17).

2. Dispositif de coupe selon la revendication 1,
**caractérisé en ce que** la garniture de coupe (3), le boîtier de moteur (4) et la poignée (6) s'étendent dans des directions radiales (R1, R2, R3) depuis la section de boîtier centrale (2).

3. Dispositif de coupe selon la revendication 1,
**caractérisé en ce qu'**en vue latérale du dispositif de coupe (1), la garniture de coupe (3), le boîtier de moteur (4) et la poignée (6) s'étendent radialement par rapport à l'axe de rotation (16).

4. Dispositif de coupe selon la revendication 1,
**caractérisé en ce qu'**à l'intérieur du contour de la roue d'entraînement (17) est disposée une roue à chaîne (18) qui est couverte par un couvercle de roue à chaîne (21).

5. Dispositif de coupe selon la revendication 4,
**caractérisé en ce que** le couvercle de roue à chaîne (21) fait partie de la section de boîtier centrale (2).

6. Dispositif de coupe selon la revendication 1,
**caractérisé en ce que** l'axe longitudinal de poignée (33) et l'axe longitudinal de boîtier de moteur (23) définissent un angle pour la main (26) s'ouvrant vers l'extrémité arrière (9) de la poignée (6) dans la plage de 40° à 80°, de telle sorte que le boîtier de moteur (4) et la poignée (6) délimitent un logement protégé (30) pour une main d'utilisateur.

7. Dispositif de coupe selon la revendication 1,
**caractérisé en ce que** l'angle pour la main (26) situé entre l'axe longitudinal de poignée (33) de la poignée (6) et l'axe longitudinal de boîtier de moteur (23) a une grandeur de 60°.

8. Dispositif de coupe selon la revendication 1,
**caractérisé en ce qu'**un angle de poignée (36) situé entre l'axe longitudinal de poignée (33) et l'axe longitudinal de garniture de coupe (13) est supérieur à 90°.

9. Dispositif de coupe selon la revendication 8,
**caractérisé en ce que** l'angle de poignée (36) est de 150°.

10. Dispositif de coupe selon la revendication 8,
**caractérisé en ce que** l'angle de poignée (36) est cloisonné par une protection pour les doigts (40).

11. Dispositif de coupe selon la revendication 10,
**caractérisé en ce que** la protection pour les doigts (40) délimite avec l'axe longitudinal de poignée (33) un angle pour les doigts (44) de 80° à 110° s'ouvrant vers l'extrémité arrière (9) de la poignée (6).

12. Dispositif de coupe selon la revendication 11,
**caractérisé en ce que** l'angle pour les doigts (44) est de 90°.

13. Dispositif de coupe selon la revendication 1,
**caractérisé en ce qu'**un angle d'appareil (46) situé entre l'axe longitudinal de boîtier de moteur (23) et l'axe longitudinal de garniture de coupe (13) est supérieur à 90°, en particulier est de 150°.

14. Dispositif de coupe selon les revendications 12 et 13,
**caractérisé en ce que** la somme de l'angle pour la main (26) et de l'angle d'appareil (46) est supérieure à 180°.
